# EUROPÄISCHE PATENTSCHRIFT

(11) **EP 1 993 892 B1**
(45) Veröffentlichungstag und Bekanntmachung des Hinweises auf die Patenterteilung: **17.05.2017**
(21) Anmeldenummer: 07704522.7
(22) Anmeldetag: 12.02.2007
(51) Int. Cl.: B60T 13/575

(54) **PNEUMATISCHER BREMSKRAFTVERSTÄRKER**
PNEUMATIC BRAKE BOOSTER
SERVOFREIN PNEUMATIQUE

(30) Priorität: 10.03.2006 DE 102006011571; 22.03.2006 DE 102006013106
(43) Veröffentlichungstag der Anmeldung: 26.11.2008
(73) Patentinhaber: Continental Teves AG & Co. oHG, 60488 Frankfurt (DE)
(72) Erfinder: LIND, Klaus, 61200 Wölfersheim (DE); FALLER, Jürgen, 63796 Kahl (DE)
(86) Internationale Anmeldenummer: PCT/EP2007/051344
(87) Internationale Veröffentlichungsnummer: WO 2007/104624

(56) Entgegenhaltungen:
- EP-A1- 0 509 868
- DE-A1- 3 941 604
- DE-A1- 4 208 384
- FR-A1- 2 864 504
- US-A- 5 233 905

## Beschreibung

Die Erfindung betrifft einen pneumatischen Bremskraftverstärker mit einem Verstärkergehäuse, welches durch mindestens eine mit einem pneumatischen Differenzdruck beaufschlagbare axial bewegliche Wand in mindestens eine Arbeitskammer und mindestens eine Unterdruckkammer unterteilt ist, einem betätigbaren Eingangsglied umfassend einen Ventilkolben, einem Ausgangsglied zur Beaufschlagung eines Hauptbremszylinders mit einer Ausgangskraft, einem in einem Steuergehäuse angeordneten, durch den Ventilkolben betätigbaren Steuerventil, welches den Differenzdruck steuert, und einem elastischen Reaktionselement, welches in einer Steuergehäuseausnehmung angeordnet ist und an welchem das Ausgangsglied anliegt, wobei Mittel vorgesehen sind, welche bei zusammengebautem Bremskraftverstärker eine Einstellung eines Abstandes zwischen dem Ventilkolben und dem Reaktionselement ermöglichen.

Von der Automobilindustrie werden hohe Anforderungen bezüglich der Bremskraftverstärkerkennlinie gestellt. Daher ist es erforderlich, den oben erwähnten Abstand zwischen Ventilkolben und Reaktionselement, das so genannte z-Maß, möglichst genau einzustellen. Das z-Maß bestimmt bekanntermaßen das Verhalten des Bremskraftverstärkers in der Anfangsphase seiner Betätigung und ermöglicht einen sprunghaften Anstieg der Ausgangskraft bzw. des Ausgangsdruckes bei der Betätigung des Bremskraftverstärkers mit einer vorher festgelegten Eingangskraft (Springereffekt). Bedingt durch unterschiedliche Shorehärten des Reaktionselementes und Bauteiltoleranzen ergeben sich sehr hohe Ausgangskrafttoleranzen und die Ausgangskraft liegt in einem sehr weiten Bereich (Streuband). Damit kann den Forderungen der Automobilindustrie bezüglich eines sehr engen Streubandes zum Teil nicht nachgekommen werden.

Ein pneumatischer Bremskraftverstärker der eingangs genannten Gattung ist aus der DE 39 41 604 A1 sowie aus der DE 42 08 834 A1 bekannt. Die Einstellung des z-Maßes erfolgt bei diesem durch Änderung der axialen Baulänge des zweiteilig ausgebildeten Ventilkolbens, indem ein erster Kolbenteil mittels eines geeigneten Werkzeugs gegenüber einem im Steuergehäuse verdrehgesichert geführten zweiten Kolbenteil gedreht wird.

Bei einem anderen einstellbaren pneumatischen Bremskraftverstärker, der aus der DE 42 08 384 A1 bekannt ist, erfolgt die Einstellung des gewünschten z-Maßes mittels einer mit dem ersten Kolbenteil permanent im Eingriff stehenden, koaxial zur Kolbenstange angeordneten Hülse, die nach dem beendeten Einstellvorgang durch ihre formschlüssige Verbindung mit dem Steuergehäuse verdrehgesichert wird. Die Verdrehsicherung erfolgt dabei vorzugsweise durch einen Sicherungsring, der auf die Hülse aufgesteckt wird und dessen radiale Vorsprünge in auf dem Innenumfang des Steuergehäuses ausgebildete Nuten eingreifen. Der Sicherungsring wird anschließend durch den Randbereich einer das Steuergehäuse schützenden elastischen Schutzkappe gehalten, der in einer in der Hülse ausgebildeten Umfangsnut eingeknöpft ist.

Als nachteilig wird der aufwendige Aufbau der bekannten Bremskraftverstärker mit einstellbarem z-Maß angesehen. Ferner ist die Verbindung des Eingangsgliedes mit einem Bremspedal von Nachteil, welche bei der Einstellung gelöst werden muss.

Aufgabe der Erfindung ist es, einen gattungsgemäßen Bremskraftverstärker bereitzustellen, welcher eine einfache Realisierung eines sehr engen Streubandes ermöglicht und einen einfachen Aufbau aufweist.

Die Aufgabe wird dadurch gelöst, dass die Mittel zur Einstellung des Abstandes am Ausgangsglied vorgesehen sind. Das Ausgangsglied ist auch bei einem zusammengebauten Bremskraftverstärker leicht zugänglich, wodurch die Realisierung eines sehr engen Streubandes mit einfachen Mitteln möglich ist.

Weiter wird ein Verfahren zur Einstellung des axialen Abstandes zwischen dem Ventilkolben und dem Reaktionselement bei einem pneumatischen Bremskraftverstärker vorgeschlagen, dessen Unterdruckkammer mit einem Unterdruck beaufschlagbar und die Arbeitskammer belüftbar ist, indem auf den Ventilkolben eine vorher festgelegte Eingangskraft bei gleichzeitiger Messung der Ausgangskraft wirkt, dessen Besonderheit darin besteht, dass die Einstellung des axialen Abstandes durch eine Veränderung des Ausgangsgliedes erfolgt.

Vorzugsweise ermöglichen die Mittel zur Einstellung des Abstandes eine Veränderung eines Kammervolumens des Reaktionselements ermöglichen, wobei das Kammervolumen des Reaktionselements durch die Steuergehäuseausnehmung und das Ausgangsglied bestimmt ist. Bei der Beaufschlagung des Bremskraftverstärkers, der an eine Unterdruckquelle angeschlossen ist, stellt sich in dem Reaktionselement adäquat zu den herrschenden Kräften ein kraftrelevanter spezifischer Druck ein. Durch eine Veränderung des Kammervolumens ist dieser spezifische Druck in dem Reaktionselement und somit auch die Ausgangskraft sehr genau einstellbar.

Eine vorteilhafte Ausführungsform der Erfindung sieht vor, dass das Ausgangsglied zweiteilig mit einer Druckplatte und einer Druckstange vorgesehen ist, wobei die Druckplatte am Reaktionselement anliegt und eine axiale, mittige Durchgangsbohrung aufweist, in welcher ein Zapfen mit einer axialen Länge der Druckstange geführt angeordnet ist. Die Veränderung des Kammervolumens erfolgt auf einfache Weise durch den Austausch der Druckstange mit einer bestimmten Länge L des Zapfens. Je nachdem, welche Länge der Zapfen aufweist, wird das Kammervolumen des Reaktionselementes auf einfache Weise vergrößert oder verkleinert. Dabei ist es von Vorteil, wenn die Druckstange an ihrer Außenseite Mittel zur Identifizierung der Länge des Zapfens aufweist, wodurch Verwechslungen der Druckstangen ausgeschlossen werden können.

Um den Springereffekt auf einfache Weise zu beeinflussen, kann gemäß einer vorteilhaften Ausführungsform der Erfindung an einem freien Ende des Zapfens eine Vorwölbung vorgesehen sein.

Eine andere vorteilhafte Ausführungsform der Erfindung sieht vor, dass das freie Ende des Zapfens gewölbt ausgebildet ist. Weiter kann das freie Ende des Zapfens kegelförmig ausgebildet sein.

Um das Einführen des Zapfens in die Durchgangbohrung der Druckplatte zu erleichtern, ist an einem freien Ende des Zapfens eine Radius oder eine Einführschräge vorgesehen.

Vorzugsweise ist die Druckplatte im Wesentlichen scheibenförmig vorgesehen, wodurch eine sehr einfache Herstellung der Druckplatte erreicht werden kann.

Die Druckplatte kann gemäß einer vorteilhaften Ausführungsform einen in Richtung Druckstange ausgebildeten Schaft aufweisen, welcher in einem, an dem Steuergehäuse angeordneten Führungsteller geführt ist. Dabei wird der Austausch der Druckstange vereinfacht.

Eine gute Führung der Druckstange kann dadurch erzielt werden, dass die Druckplatte einen in Richtung Druckstange ausgebildeten Schaft aufweist, welcher teilweise in einem, an dem Steuergehäuse angeordneten Führungsteller geführt ist.

Vorzugsweise weist auch die Druckplatte an einer Innenseite eine Einführschräge auf, wodurch das Einführen des Zapfens weiter erleichtert ist.

Eine Veränderung des Kammervolumens des Reaktionselements kann ohne Austausch eines Bauteiles des Ausgangsglieds dadurch erreicht werden, dass das Ausgangsglied auf einer, dem Reaktionselement zugewandten Seite eine Gewindebohrung aufweist, in welche eine Madenschraube einschraubbar ist, wobei die Madenschraube eine Veränderung des Kammervolumens des Reaktionselements ermöglicht. Das Ausgangsglied bildet mit der Madenschraube eine vormontierbare Baugruppe, wodurch die Montage aufgrund weniger Bauteile vereinfacht ist. Die Madenschraube erlaubt eine stufenlose Einstellung der Ausgangskraft bei einer bestimmten Eingangskraft, d.h. eine stufenlose Einstellung unter Last, wodurch zusätzlich die Shorehärtenstreuung des Reaktionselementes kompensiert werden kann.

Zur Verdrehung der Madenschraube weist das Ausgangsglied eine Durchgangsbohrung auf, welche in die Gewindebohrung mündet und durch welche ein Verstellwerkzeug zur Verdrehung der Madenschraube einführbar ist. Nach dem Einstellvorgang kann das Verstellwerkzeug ohne großen Aufwand wieder entfernt werden und das Verdrehen der Madenschraube erlaubt eine sehr genaue Einstellung des spezifischen Druckes des Reaktionselements.

Eine vorteilhafte Ausführungsform der Erfindung sieht vor, dass zwischen der Madenschraube und dem Reaktionselement eine Scheibe vorgesehen ist, wobei das Ausgangsglied auf der dem Reaktionsglied zugewandten Seite eine Ausnehmung mit einem Durchmesser aufweist, in welcher die Scheibe angeordnet ist. Das Vorsehen der Ausnehmung und der Scheibe reduziert die Spaltextrusion des Reaktionselements, da zwischen der Ausnehmung und der Scheibe aus fertigungstechnischen Gründen sehr viel geringere Toleranzen realisiert werden können als zwischen der Gewindebohrung und der Madenschraube. Durch die verminderte Spaltextrusion wird der Verschleiß des Reaktionselementes verringert.

Vorzugsweise ist der Durchmesser der Ausnehmung größer vorgesehen als ein Durchmesser der Gewindebohrung, wodurch sich günstigere Flächenverhältnisse ergeben und die Ausnehmung für die Scheibe einfacher herstellbar ist.

Um den Springereffekt auf eine andere einfache Weise zu beeinflussen, kann gemäß einer vorteilhaften Ausführungsform der Erfindung die Scheibe auf einer dem Reaktionselement zugewandten Seite eine Vorwölbung aufweisen.

Andere vorteilhafte Ausführungsformen der Erfindung sehen vor, dass die Scheibe auf der dem Reaktionselement zugewandten Seite gewölbt oder kegelförmig vorgesehen ist.

Um ein Herausfallen der Scheibe aus der Ausnehmung des Ausgangsgliedes beispielsweise beim Transport des Ausgangsgliedes zu verhindern, ist gemäß einer vorteilhaften Ausführungsform eine Klebefolie auf einer Stirnfläche des Ausgangsgliedes vorgesehen. Ist die Klebefolie derart ausgewählt, dass die Einstellung des z-Maßes trotz aufgebrachter Folie erfolgen kann, so kann diese nach der Montage des Ausgangsgliedes in den Bremskraftverstärker auf dem Ausgangsglied verbleiben. Dadurch wird die Spaltextrusion des Reaktionselements vollkommen verhindert. Wird die Klebefolie an der Stirnfläche des Ausgangsgliedes nur mit Madenschraube ohne Scheibe vorgesehen, kann dadurch die Spaltextrusion des Reaktionselements verhindert werden, ohne eine Scheibe vorzusehen.

Vorzugsweise kann zwischen dem Ventilkolben und dem Reaktionselement eine Übersetzungsscheibe vorgesehen ist, mittels welcher der Ventilkolben in kraftübertragender Verbindung mit dem Reaktionselement steht, wodurch die Übersetzungsscheibe als Teil des Eingangsgliedes bzw. des Ventilkolbens angesehen werden kann.

Der Bremskraftverstärker kann sowohl als konventioneller Bremskraftverstärker als auch mittels eines Magnetantriebs elektrisch ansteuerbar vorgesehen sein. Ferner kann der Bremskraftverstärker auch eine mechanische Bremsassistent-Funktion aufweisen.

Nachstehend wird die Erfindung anhand der Zeichnung erläutert, welche Ausführungsbeispiele zeigt. Es zeigt jeweils stark schematisiert:
- Figur 1: eine Teilansicht eines ersten Ausführungsbeispiels eines erfindungsgemäßen pneumatischen Bremskraftverstärkers im Längsschnitt;
- Figuren 2 bis 4: unterschiedliche Ausführungsformen eines Zapfens einer Druckstange des erfindungsgemäßen pneumatischen Bremskraftverstärkers gemäß Fig. 1;
- Figuren 5 bis 7: unterschiedliche Ausführungsformen einer Druckplatte des erfindungsgemäßen pneumatischen Bremskraftverstärkers gemäß Fig. 1;
- Figur 8: eine Teilansicht eines zweiten Ausführungsbeispiels eines erfindungsgemäßen pneumatischen Bremskraftverstärkers im Längsschnitt und
- Figur 9: eine Teilansicht eines leicht abgeänderten Ausgangsgliedes des zweiten Ausführungsbeispiels gemäß Fig. 8 im Längsschnitt.

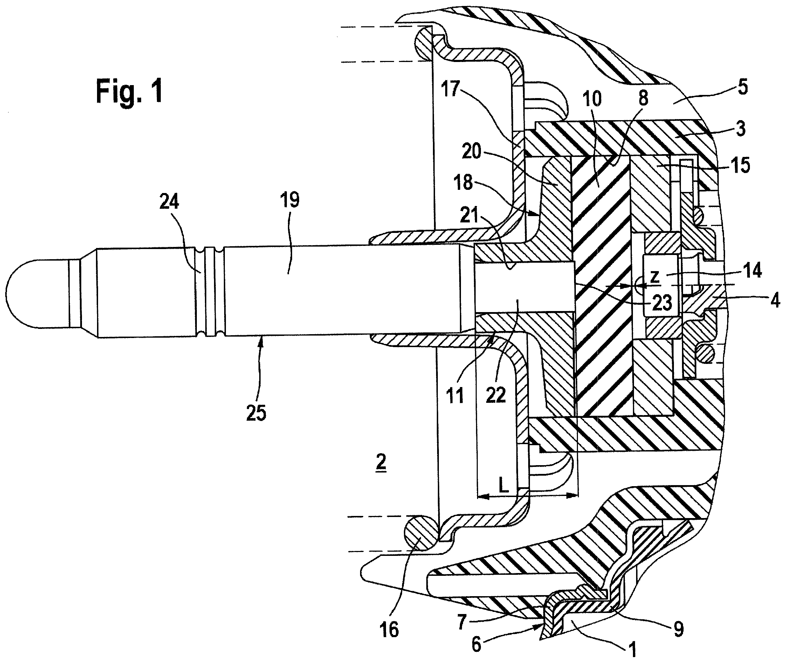

Fig. 1 zeigt eine Teilansicht eines ersten Ausführungsbeispiels eines erfindungsgemäßen pneumatischen Bremskraftverstärkers einer Kraftfahrzeugbremsanlage im Längsschnitt, wobei die Teilansicht lediglich die für die Erfindung wesentlichen Teile des Bremskraftverstärkers zeigt.

Wie allgemein bekannt ist, ist ein nicht dargestelltes Verstärkergehäuse des in Fig. 1 gezeigten Bremskraftverstärkers durch eine axial bewegliche Wand 6 in eine Arbeitskammer 1 und eine Unterdruckkammer 2 unterteilt. Die axial bewegliche Wand 6 besteht aus einem, aus Blech tiefgezogenen Membranteller 7 und einer daran anliegenden flexiblen Membran 9, die nicht dargestellt zwischen dem äußeren Umfang des Membrantellers 7 und dem Verstärkergehäuse eine Membran als Abdichtung bildet.

Ein durch ein nicht gezeigtes Eingangsglied betätigbares Steuerventil ist in einem im Verstärkergehäuse abgedichtet geführten, die bewegliche Wand 6 tragenden Steuergehäuse 3 untergebracht und besteht aus einem am Steuergehäuse 3 ausgebildeten ersten Dichtsitz, einem zweiten Dichtsitz, der an einem mit dem Eingangsglied verbundenen Ventilkolben 4 ausgebildet ist, sowie einem, mit beiden Dichtsitzen zusammenwirkenden Ventilkörper. Der Ventilkörper wird mittels einer Ventilfeder gegen die Ventilsitze gedrückt, die sich an einem Führungselement abstützt. Die Arbeitskammer 1 ist mit der Unterdruckkammer 2 über einen seitlich im Steuergehäuse 3 verlaufenden Kanal 5 verbindbar und das Eingangsglied ist mit einem nicht dargestellten Bremspedal verbunden.

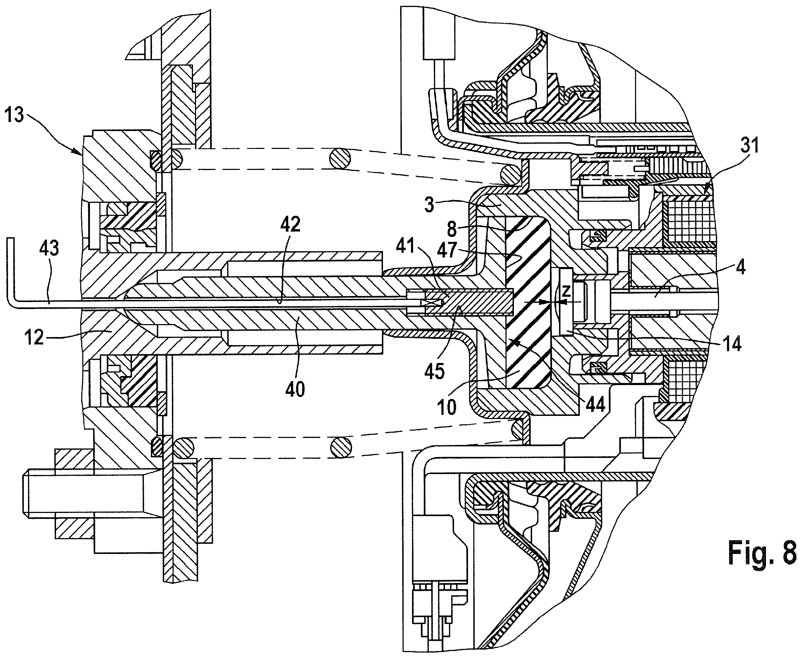

Die Bremskraft wird über ein, in einer Steuergehäuseausnehmung 8 angeordnetes gummi-elastisches Reaktionselement 10 sowie ein an dem Reaktionselement 10 anliegendes Ausgangsglied 11 auf einen Betätigungskolben 12 eines in Fig. 8 angedeutet dargestellten Hauptbremszylinders 13 der Kraftfahrzeugbremsanlage übertragen, der am unterdruckseitigen Ende des Bremskraftverstärkers angebracht ist. Die an dem Eingangsglied eingeleitete Eingangskraft wird auf das Reaktionselement 10 mittels des Ventilkolbens 4 übertragen. Wie aus Fig. 1 ersichtlich ist, ist zwischen dem Ventilkolben 4 und dem Reaktionselement 10 eine Übersetzungsscheibe 14 vorgesehen, mittels welcher der Ventilkolben 4 in kraftübertragender Verbindung mit dem Reaktionselement 10 steht. Die Übersetzungsscheibe 14 ist für die Funktion und die Erfindung nicht zwingend erforderlich und wird als Teil des Eingangsgliedes bzw. des Ventilkolbens 4 angesehen.

Das Reaktionselement 10 ist scheibenförmig aus Kunststoff- oder Gummiwerkstoff ausgebildet und verhält sich unter Druckbeanspruchung nach den Gesetzen der Hydrostatik wie ein inkompressibles Fluid. Das heißt es fungiert gewissermaßen als Summierer zwischen den, vom Ventilkolben 4 eingeleiteten Fußkräften, den über das Steuergehäuse 3 eingebrachten Verstärkungskräften sowie den Bremsreaktionskräften, welche über das Ausgangsglied 11 auf den Fahrzeugführer rückübertragen werden sollen. Folglich herrscht bei jeder Bremsbetätigungsstellung ein Kraftgleichgewicht an dem Reaktionselement 10. Ein Kammervolumen des Reaktionselements 10 wird wie ersichtlich durch die Steuergehäuseausnehmung 8 und das Ausgangsglied 11 sowie durch eine in der Steuergehäuseausnehmung 8 angeordnete Scheibe 15 bestimmt. Diese Ausgestaltung des Kammervolumens mit der Scheibe 15 ist nicht zwingend notwendig. Wie aus Fig. 8 ersichtlich ist, kann das Reaktionselement 10 auch in axialer Richtung am Steuergehäuse 3 selbst anliegen.

Eine in der Zeichnung schematisch dargestellte Rückstellfeder 16, die sich an der unterdruckseitigen Stirnwand des Verstärkergehäuses an einem nicht gezeigten Flansch abstützt, hält die bewegliche Wand 6 in der Lösestellung. Ferner stützt sich die Rückstellfeder 16 an einem Führungsteller 17 ab, welcher am Steuergehäuse 3 anliegt bzw. an diesem befestigt ist und welcher zum einen der Abstützung der Rückstellfeder 16 und zum anderen der Führung des Ausgangsgliedes 11 dient. Außerdem ist eine nicht gezeigte Rückholfeder vorgesehen, die zwischen dem Eingangsglied bzw. einer daran anliegenden Scheibe und dem Führungselement des Steuerventils angeordnet ist und deren Kraft für eine Vorspannung des Ventilkolbens 4 bzw. seines Ventilsitzes gegenüber dem Ventilkörper sorgt.

Um die Arbeitskammer 1 bei der Betätigung des Steuerventils mit der Atmosphäre verbinden zu können, ist schließlich im Steuergehäuse 5 ein nicht gezeigter, annähernd radial verlaufender Kanal ausgebildet. Die Rückkehrbewegung des Ventilkolbens 4 am Ende eines Bremsvorganges wird dabei durch ein Querglied begrenzt, das in der Lösestellung des Bremskraftverstärkers an einem am Verstärkergehäuse ausgebildeten Anschlag anliegt.

Zwischen dem Ventilkolben 4 bzw. der Übersetzungsscheibe 14 und dem Reaktionselement 10 ist in der Lösestellung ein Abstand z vorgesehen, welcher als z-Maß bekannt ist und einen so genannten Springer darstellt. Das z-Maß bestimmt das Verhalten des Bremskraftverstärkers in der Anfangsphase seiner Betätigung und ermöglicht einen sprunghaften Anstieg der Ausgangskraft bzw. des Ausgangsdruckes bei der Betätigung des Bremskraftverstärkers mit einer vorher festgelegten Eingangskraft.

Von der Automobilindustrie werden hohe Anforderungen bezüglich der Bremskraftverstärkerkennlinie gestellt. Daher ist es erforderlich, den oben erwähnten Abstand z zwischen Ventilkolben 4 bzw. der Übersetzungsscheibe 14 und Reaktionselement 10 möglichst genau einzustellen. Bedingt durch unterschiedliche Shorehärten des Reaktionselementes 10 und Bauteiltoleranzen ergeben sich normalerweise sehr hohe Ausgangskrafttoleranzen von bis zu ± 175N und die Ausgangskraft liegt nicht in dem von der Automobilindustrie sehr eng festgelegten Bereich von beispielsweise max. ± 50N (Streuband).

Wie aus Fig. 1 ersichtlich ist, ist das Ausgangsglied 11 zweiteilig mit einer Druckplatte 18 und einer Druckstange 19 vorgesehen. Die Druckplatte 18 liegt mit einem Flansch 20 am Reaktionselement 10 an und weist eine axiale, mittige Durchgangsbohrung 21 auf, in welcher ein Zapfen 22 der Druckstange 19 mit einer axialen Länge L geführt angeordnet ist.

Die Einstellung des Abstandes z an der Montagelinie erfolgt durch Anschließen des Bremskraftverstärkers an eine nicht gezeigte Unterdruckquelle, so dass im Verstärkergehäuse ein bestimmter Betriebsdruck herrscht. Weiter wird der Bremskraftverstärker mit einer bestimmten Eingangskraft F_{E}, beispielsweise 200N beaufschlagt. Als Folge des anliegenden Vakuums, des Abstandes z und der Shorehärte des Reaktionselements 10 stellt sich eine bestimmte Ausgangskraft F_{A} ein. In dem Reaktionselement 10 stellt sich adäquat zu den herrschenden Kräften ein kraftrelevanter spezifischer Druck ein.

Die Einstellung des z-Maßes unter Last hat den besonderen Vorteil, dass im Gegenteil zu einer Einstellung des z-Maßes durch Messen und entsprechendes Ändern des z-Maßes zusätzlich zu den Bauteiltoleranzen auch die Shorehärtestreuung des Reaktionselements 10 kompensiert werden kann.

Durch den Austausch der Druckstange 19 mit einem Zapfen 22 bestimmter Länge L kann das Kammervolumen des Reaktionselements 10 bzw. der spezifische Druck im Reaktionselement 10 verändert werden, wodurch sich die Ausgangskraft F_{A} einstellen lässt. Die Kraft-Kraft-Messung erfolgt zuerst mit einer Druckstange 19, bei welcher sich eine Stirnfläche 23 des Zapfens 22 auf gleicher Höhe mit dem Flansch 20 der Druckplatte 18 befindet (Null-Lage).

Ein längerer Zapfen 22 bewirkt eine Verformung des Reaktionselements 10 und damit eine Reduzierung des Abstandes z. Ein kürzerer Zapfen 22 bewirkt dagegen eine Vergrößerung des Abstandes z und die Reaktionskraft des Reaktionselementes 10 wird kleiner.

Erhöht sich der spezifische Druck in dem Reaktionselement 10, wird über die Verbindung zum Ventilkolben 4 bzw. zur Übersetzungsscheibe 14 eine Bremskraftverstärkerregelung erzwungen, wodurch sich die Ausgangskraft F_{A} reduziert. Im Gegensatz hierzu steigt die Ausgangskraft F_{A}, wenn der spezifische Druck in dem Reaktionselement 10 durch einen kürzeren Zapfen 22, d.h. durch eine Vergrößerung des Kammervolumens reduziert wird.

Zur Identifizierung der Druckstange 19 mit einer bestimmten Länge L des Zapfens 22 können beispielsweise Rillen 24 an ihrer Außenseite 25 vorgesehen werden.

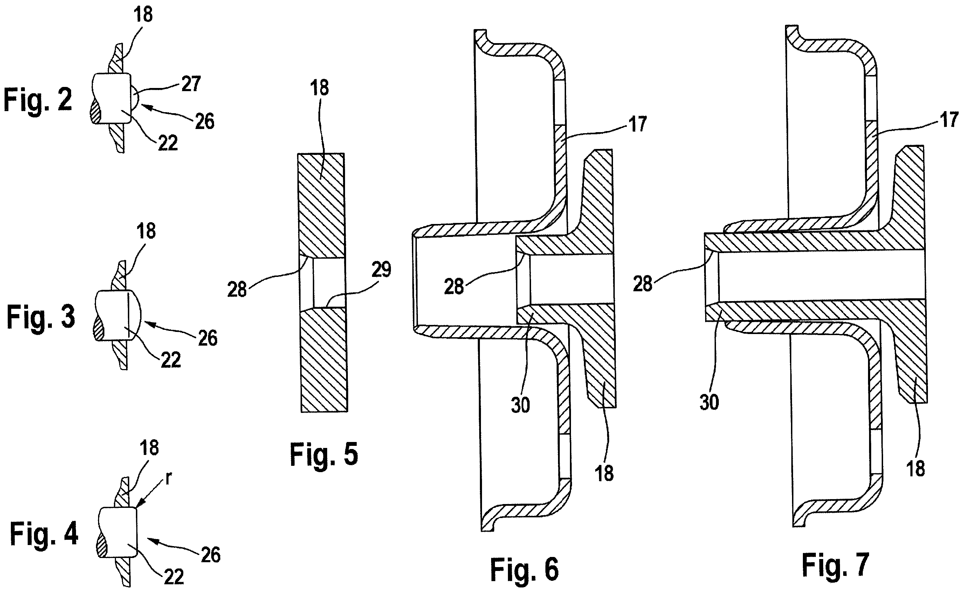

Ferner kann, wie die Fig. 2 bis 4 zeigen, ein freies Ende 26 des Zapfens 22 unterschiedlich ausgestaltet sein, um Springereffekt zu beeinflussen bzw. um die Einführung des Zapfens 22 in die Durchgangsbohrung 21 der Druckplatte 18 zu erleichtern. So kann beispielsweise gemäß Fig. 2 an dem Ende 26 eine Vorwölbung 27 vorgesehen oder das Ende 26 kann gemäß Fig. 3 gewölbt ausgebildet sein. Als weitere, nicht gezeigte Alternative kann das freie Ende 26 kegelförmig geformt sein.

Wie aus Fig. 4 ersichtlich ist, kann an dem freien Ende 26 des Zapfens 22 ein Radius r oder eine Einführschräge vorgesehen sein, um die Montage des Zapfens 22 zu erleichtern.

Die Fig. 5 bis 7 zeigen unterschiedliche Ausführungsformen der Druckplatte 18. Diese kann gemäß Fig. 5 im Wesentlichen scheibenförmig sein, wodurch eine einfache Herstellbarkeit erreicht wird. Eine Einführschräge 28 auf einer Innenseite 29 erleichtert zusätzlich die Montage der Druckstange 19.

Gemäß den Fig. 6 und 7 kann die Druckplatte 18 einen in Richtung Druckstange 19 ausgebildeten Schaft 30 aufweist, welcher in dem Führungsteller 17 teilweise oder ganz geführt ist. Die teilweise Führung gemäß Fig. 6 bzw. auch gemäß Fig. 1 hat den Vorteil, dass auch die Druckstange 19 mittels des Führungstellers 17 geführt werden kann.

Fig. 8 zeigt eine Teilansicht eines zweiten Ausführungsbeispiels eines erfindungsgemäßen Bremskraftverstärkers im Längsschnitt. Der Bremskraftverstärker ist bei diesem Ausführungsbeispiel als elektrisch ansteuerbarer Bremskraftverstärker mit einem Magnetantrieb 31 ausgestaltet, wobei dies für die Erfindung nicht zwingend erforderlich ist. Das Ausführungsbeispiel ist ebenso auf einen konventionellen Bremskraftverstärker übertragbar.

Wie Fig. 8 zu entnehmen ist, ist in dem Ausgangsglied 40 der zweiten Ausführungsform auf einer, dem Reaktionselement 10 zugewandten Seite 44 eine Madenschraube 41 integriert vorgesehen, welche eine Veränderung des Kammervolumens des Reaktionselements 10 ermöglicht. Die Madenschraube 41 ist in eine Gewindebohrung 45 einschraubbar, deren Länge je nach Dimensionierung des Ausgangsgliedes 40 unterschiedlich sein kann. Zur Verdrehung der Madenschraube 40 weist das Ausgangsglied 40 eine Durchgangsbohrung 42 auf, welche in die Gewindebohrung 45 mündet und durch welche ein Verstellwerkzeug 43 einführbar ist.

Die Einstellung des Abstandes z zwischen Reaktionselement 10 und Ventilkolben 4 bzw. Übersetzungsscheibe 14 erfolgt analog zur Ausführungsform gemäß Fig. 1 unter Last mit einer bestimmten Eingangskraft F_{E} mit dem Unterscheid, dass das Ausgangsglied 40 bzw. ein Teil des Ausgangsgliedes nicht ausgetauscht werden muss, sondern zur Veränderung des Kammervolumens des Reaktionselements 10 lediglich die Madenschraube 41 verdreht werden muss. Die Madenschraube 41 erlaubt eine stufenlose Einstellung der Ausgangskraft F_{A} bei einer bestimmten Eingangskraft F_{E}, wodurch die Shorehärtenstreuung des Reaktionselementes 10 kompensiert werden kann.

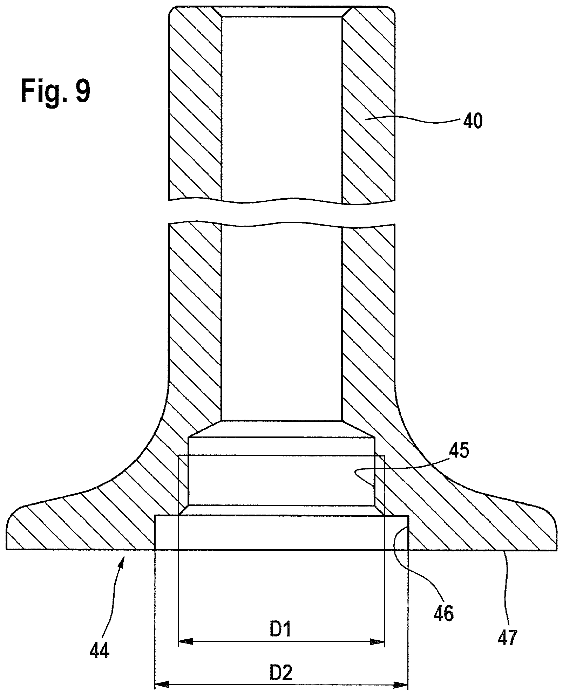

Fig. 9 zeigt eine Teilansicht eines leicht abgeänderten Ausgangsgliedes 40 des zweiten Ausführungsbeispiels gemäß Fig. 8 im Längsschnitt. Wie ersichtlich ist, weist das Ausgangsglied 40 auf der Seite 44 eine mittig vorgesehene Ausnehmung 46, an welche sich die Gewindebohrung 45 anschließt. In dieser Ausnehmung 46 ist zwischen der Madenschraube 41 und dem Reaktionselement 10 eine nicht dargestellte Scheibe angeordnet, welche durch Verdrehen der Madenschraube 41 das Kammervolumen des Reaktionselements 10 vergrößert oder verkleinert. Die Scheibe muss also derart bemessen sein, dass sie in die Ausnehmung 46 eintauchen kann.

In einer ersten Einstellung ist die Madenschraube 41 so weit in die Gewindebohrung 46 hineingeschraubt, dass die Scheibe und Stirnfläche 47 des Ausgangsgliedes 40 bündig vorgesehen sind (Null-Lage).

Durch das Vorsehen der Scheibe kann die Spaltextrusion des Reaktionselementes 10 und somit dessen Verschleiß reduziert werden, da zwischen der Ausnehmung 46 und der Scheibe aus fertigungstechnischen Gründen sehr viel geringere Toleranzen realisiert werden können als zwischen der Gewindebohrung 45 und der Madenschraube 41.

Die Ausnehmung weist einen Durchmesser D2 auf, der größer vorgesehen ist als ein Durchmesser D1 der Gewindebohrung 45. Dadurch ergeben sich günstigere Flächenverhältnisse und die Ausnehmung 46 ist ohne Schwierigkeiten herstellbar.

Die Scheibe kann, wie bereits zum Zapfen 22 gemäß Fig. 2 und 3 beschrieben wurde, auf einer dem Reaktionselement 10 zugewandten Seite eine Vorwölbung aufweisen oder gewölbt oder kegelförmig ausgestaltet sein, um den Springereffekt auf einfache Weise zu beeinflussen.

Um ein Herausfallen der Scheibe aus der Ausnehmung des Ausgangsgliedes zu verhindern, kann zur Transportsicherung der Scheibe eine Klebefolie auf der Stirnfläche 47 des Ausgangsgliedes 40 vorgesehen. Dies kann nach der Montage auf dem Ausgangsglied 40 verbleiben, wenn sie derart widerständig vorgesehen ist, dass die Einstellung des z-Maßes trotz aufgebrachter Folie erfolgen kann. Durch die Klebefolie kann einerseits die Transportsicherung des montierten Ausgangsgliedes 40 mit Madenschraube 41 und Scheibe ermöglicht werden und andererseits wird die Spaltextrusion des Reaktionselements 10 vollkommen verhindert.

Das Anbringen der beschriebenen Klebefolie ist ebenso an der Stirnfläche 47 des Ausgangsgliedes 40 gemäß Fig. 8 nur mit Madenschraube 41 ohne Scheibe möglich. Dadurch kann die Spaltextrusion des Reaktionselements 10 verhindert werden, ohne die Scheibe vorzusehen.

### Bezugszeichenliste

- 1: Arbeitskammer
- 2: Unterdruckkammer
- 3: Steuergehäuse
- 4: Ventilkolben
- 5: Kanal
- 6: bewegliche Wand
- 7: Membranteller
- 8: Steuergehäuseausnehmung
- 9: Membran
- 10: Reaktionselement
- 11: Ausgangsglied
- 12: Betätigungskolben
- 13: Hauptbremszylinder
- 14: Übersetzungsscheibe
- 15: Scheibe
- 16: Rückstellfeder
- 17: Führungsteller
- 18: Druckplatte
- 19: Druckstange
- 20: Flansch
- 21: Durchgangsbohrung
- 22: Zapfen
- 23: Stirnfläche
- 24: Rille
- 25: Außenseite
- 26: Ende
- 27: Vorwölbung
- 28: Einführschräge
- 29: Innenseite
- 30: Schaft
- 31: Magnetantrieb
- 40: Ausgangsglied
- 41: Madenschraube
- 42: Durchgangsbohrung
- 43: Verstellwerkzeug
- 44: Seite
- 45: Gewindebohrung
- 46: Ausnehmung
- 47: Stirnfläche

- D1: Durchmesser
- D2: Durchmesser
- L: Länge
- F_{A}: Ausgangskraft
- F_{E}: Eingangskraft
- r: Radius
- z: Abstand

## Patentansprüche

1. Pneumatischer Bremskraftverstärker mit
- einem Verstärkergehäuse, welches durch mindestens eine mit einem pneumatischen Differenzdruck beaufschlagbare axial bewegliche Wand (6) in mindestens eine Arbeitskammer (1) und mindestens eine Unterdruckkammer (2) unterteilt ist,
- einem betätigbaren Eingangsglied umfassend einen Ventilkolben (4),
- einem Ausgangsglied (11;40) zur Beaufschlagung eines Hauptbremszylinders (13) mit einer Ausgangskraft,
- einem in einem Steuergehäuse (3) angeordneten, durch den Ventilkolben (4) betätigbaren Steuerventil, welches den Differenzdruck steuert, und
- einem elastischen Reaktionselement (10), welches in einer Steuergehäuseausnehmung (8) angeordnet ist und an welchem das Ausgangsglied (11;40) anliegt,
- wobei Mittel vorgesehen sind, welche bei zusammengebautem Bremskraftverstärker eine Einstellung eines Abstandes (z) zwischen dem Ventilkolben (4) und dem Reaktionselement (10) ermöglichen,
**dadurch gekennzeichnet, dass**
die Mittel zur Einstellung des Abstandes (z) am Ausgangsglied (11;40) vorgesehen sind.

2. Bremskraftverstärker nach Anspruch 1, **dadurch gekennzeichnet, dass** die Mittel zur Einstellung des Abstandes (z) eine Veränderung eines Kammervolumens des Reaktionselements (10) ermöglichen, wobei das Kammervolumen des Reaktionselements (10) durch die Steuergehäuseausnehmung (8) und das Ausgangsglied (11;40) bestimmt ist.

3. Bremskraftverstärker nach Anspruch 2, **dadurch gekennzeichnet, dass** das Ausgangsglied (11) zweiteilig mit einer Druckplatte (18) und einer Druckstange (19) vorgesehen ist, wobei die Druckplatte (18) am Reaktionselement (10) anliegt und eine axiale, mittige Durchgangsbohrung (21) aufweist, in welcher ein Zapfen (22) mit einer axialen Länge (L) der Druckstange (19) geführt angeordnet ist.

4. Bremskraftverstärker nach Anspruch 3, **dadurch gekennzeichnet, dass** die Druckstange (19) an ihrer Außenseite (25) Mittel (24) zur Identifizierung der Länge des Zapfens (22) aufweist.

5. Bremskraftverstärker nach Anspruch 3 oder 4, **dadurch gekennzeichnet, dass** an einem freien Ende (26) des Zapfens (22) eine Vorwölbung (27) vorgesehen ist.

6. Bremskraftverstärker nach Anspruch 3 oder 4, **dadurch gekennzeichnet, dass** ein freies Ende (26) des Zapfens (22) gewölbt ausgebildet ist.

7. Bremskraftverstärker nach Anspruch 3 oder 4, **dadurch gekennzeichnet, dass** ein freies Ende (26) des Zapfens (22) kegelförmig ausgebildet ist.

8. Bremskraftverstärker nach einem der vorangegangen Ansprüche Anspruch 3 bis 5, **dadurch gekennzeichnet, dass** an einem freien Ende (22) des Zapfens eine Radius (r) oder eine Einführschräge vorgesehen ist.

9. Bremskraftverstärker nach einem der vorangegangenen Ansprüche 3 bis 8, **dadurch gekennzeichnet, dass** die Druckplatte (18) im Wesentlichen scheibenförmig vorgesehen ist.

10. Bremskraftverstärker nach einem der vorangegangenen Ansprüche 3 bis 8, **dadurch gekennzeichnet, dass** die Druckplatte (18) einen in Richtung Druckstange (19) ausgebildeten Schaft (30) aufweist, welcher in einem, an dem Steuergehäuse (3) angeordneten Führungsteller (17) geführt ist.

11. Bremskraftverstärker nach einem der vorangegangenen Ansprüche 3 bis 8, **dadurch gekennzeichnet, dass** die Druckplatte (18) einen in Richtung Druckstange (19) ausgebildeten Schaft (30) aufweist, welcher teilweise in einem, an dem Steuergehäuse (3) angeordneten Führungsteller (17) geführt ist.

12. Bremskraftverstärker nach einem der vorangegangenen Ansprüche 10 oder 11, **dadurch gekennzeichnet, dass** die Druckplatte (18) an einer Innenseite (29) eine Einführschräge (28) aufweist.

13. Bremskraftverstärker nach Anspruch 2, **dadurch gekennzeichnet, dass** das Ausgangsglied (40) auf einer, dem Reaktionselement (10) zugewandten Seite (44) eine Gewindebohrung (45) aufweist, in welche eine Madenschraube (41) einschraubbar ist, wobei die Madenschraube (41) eine Veränderung des Kammervolumens des Reaktionselements (10) ermöglicht.

14. Bremskraftverstärker nach Anspruch 13, **dadurch gekennzeichnet, dass** das Ausgangsglied (40) eine Durchgangsbohrung (21) aufweist, welche in die Gewindebohrung (45) mündet und durch welche ein Verstellwerkzeug (43) zur Verdrehung der Madenschraube (41) einführbar ist.

15. Bremskraftverstärker nach Anspruch 13 oder 14, **dadurch gekennzeichnet, dass** zwischen der Madenschraube (41) und dem Reaktionselement (10) eine Scheibe vorgesehen ist, wobei das Ausgangsglied (40) auf der dem Reaktionsglied (10) Seite (44) eine Ausnehmung (46) mit einem Durchmesser (D2) aufweist, in welcher die Scheibe angeordnet ist.

16. Bremskraftverstärker nach Anspruch 15, **dadurch gekennzeichnet, dass** der Durchmesser (D2) der Ausnehmung (46) größer vorgesehen ist als ein Durchmesser (D1) der Gewindebohrung (46).

17. Bremskraftverstärker nach Anspruch 16, **dadurch gekennzeichnet, dass** die Scheibe auf einer dem Reaktionselement (10) zugewandten Seite eine Vorwölbung aufweist.

18. Bremskraftverstärker nach Anspruch 16, **dadurch gekennzeichnet, dass** die Scheibe auf einer dem Reaktionselement (10) zugewandten Seite gewölbt vorgesehen ist.

19. Bremskraftverstärker nach Anspruch 16, **dadurch gekennzeichnet, dass** die Scheibe auf einer dem Reaktionselement (10) zugewandten Seite kegelförmig vorgesehen ist.

20. Bremskraftverstärker nach einem der Ansprüche 13 bis 20, **dadurch gekennzeichnet, dass** eine Klebefolie auf einer Stirnfläche (47) des Ausgangsgliedes (40) vorgesehen ist.

21. Bremskraftverstärker nach einem der vorangegangenen Ansprüche, **dadurch gekennzeichnet, dass** zwischen dem Ventilkolben (4) und dem Reaktionselement (10) eine Übersetzungsscheibe (14) vorgesehen ist, mittels welcher der Ventilkolben (4) in kraftübertragender Verbindung mit dem Reaktionselement (10) steht.

22. Bremskraftverstärker nach einem der vorangegangenen Ansprüche, **dadurch gekennzeichnet, dass** der Bremskraftverstärker mittels eines Magnetantriebs (31) elektrisch ansteuerbar ist.

23. Verfahren zur Einstellung des axialen Abstandes (z) zwischen dem Ventilkolben (4) und dem Reaktionselement (10) bei einem pneumatischen Bremskraftverstärker nach einem der vorhergehenden Ansprüchen 1 bis 22, dessen Unterdruckkammer (2) mit einem Unterdruck beaufschlagbar und die Arbeitskammer (1) belüftbar ist, indem auf den Ventilkolben (4) eine vorher festgelegte Eingangskraft (F_{E}) bei gleichzeitiger Messung der Ausgangskraft (F_{A}) wirkt, **dadurch gekennzeichnet, dass** die Einstellung des axialen Abstandes (z) durch eine Veränderung des Ausgangsgliedes (11;40) erfolgt.

24. Verfahren nach Anspruch 23, wobei das Ausgangsglied (11) des Bremskraftverstärkers zweiteilig mit einer Druckplatte (18) und einer Druckstange (19) vorgesehen ist und wobei die Druckplatte (18) am Reaktionselement (10) anliegt und eine axiale, mittige Durchgangsbohrung (21) aufweist, in welcher ein Zapfen (22) mit einer axialen Länge (L) der Druckstange (19) geführt angeordnet ist, **dadurch gekennzeichnet, dass** die Einstellung des axialen Abstandes (z) durch unterschiedliche Längen (L) des Zapfens (22) der Druckstange (19) erfolgt.

25. Verfahren nach Anspruch 23, wobei das Ausgangsglied (40) auf einer, dem Reaktionselement (10) zugewandten Seite (44) eine Gewindebohrung (45) aufweist, in welche eine Madenschraube (41) einschraubbar ist und das Ausgangsglied (40) eine Durchgangsbohrung (42) aufweist, welche in die Gewindebohrung (45) mündet, **dadurch gekennzeichnet, dass** die Einstellung des axialen Abstandes (z) durch Verdrehung der Madenschraube (41) erfolgt.

## Claims

1. Pneumatic brake booster, with
- a booster housing which is subdivided into at least one working chamber (1) and at least one vacuum chamber (2) by means of at least one axially movable wall (6) capable of being acted upon with a pneumatic differential pressure,
- an actuable input member comprising a valve piston (4),
- an output member (11; 40) for acting upon a brake master cylinder (13) with an output force,
- a control valve which is arranged in a control housing (3) and can be actuated by the valve piston (4) and which controls the differential pressure, and
- an elastic reaction element (10) which is arranged in a control housing recess (8) and against which the output member (11; 40) bears,
- means being provided, which, with the brake booster assembled, make it possible to set a distance (z) between the valve piston (4) and the reaction element (10),
**characterized in that**
the means for setting the distance (z) are provided on the output member (11; 40).

2. Brake booster according to Claim 1, **characterized in that** the means for setting the distance (z) make it possible to vary a chamber volume of the reaction element (10), the chamber volume of the reaction element (10) being determined by the control housing recess (8) and the output member (11; 40).

3. Brake booster according to Claim 2, **characterized in that** the output member (11) is provided in two parts with a pressure plate (18) and with a pressure rod (19), the pressure plate (18) bearing against the reaction element (10) and having an axial central through bore (21) in which is arranged, guided, a tenon (22) having an axial length (L) of the pressure rod (19).

4. Brake booster according to Claim 3, **characterized in that** the pressure rod (19) has on its outside (25) means (24) for identifying the length of the tenon (22).

5. Brake booster according to Claim 3 or 4, **characterized in that** a convex curvature (27) is provided at a free end (26) of the tenon (22).

6. Brake booster according to Claim 3 or 4, **characterized in that** a free end (26) of the tenon (22) is of convexly curved design.

7. Brake booster according to Claim 3 or 4, **characterized in that** a free end (26) of the tenon (22) is designed conically.

8. Brake booster according to one of the preceding Claims 3 to 5, **characterized in that** a radius (r) or an introduction slope is provided at a free end (22) of the tenon.

9. Brake booster according to one of the preceding Claims 3 to 8, **characterized in that** the pressure plate (18) is provided essentially disk-shaped.

10. Brake booster according to one of the preceding Claims 3 to 8, **characterized in that** the pressure plate (18) has a shank (30) which is formed in the direction of the pressure rod (19) and which is guided in a guide dish (17) arranged on the control housing (3).

11. Brake booster according to one of the preceding Claims 3 to 8, **characterized in that** the pressure plate (18) has a shank (30) which is formed in the direction of the pressure rod (19) and which is guided partially in a guide dish (17) arranged on the control housing (3).

12. Brake booster according to either one of the preceding Claims 10 and 11, **characterized in that** the pressure plate (18) has an introduction slope (28) on an inside (29).

13. Brake booster according to Claim 2, **characterized in that** the output member (40) has, on a side (44) facing the reaction element (10), a threaded bore (45) into which a headless screw (41) can be screwed, the headless screw (41) making it possible to vary the chamber volume of the reaction element (10).

14. Brake booster according to Claim 13, **characterized in that** the output member (40) has a through bore (21) which issues into the threaded bore (45) and through which an adjusting tool (43) for rotating the headless screw (41) can be introduced.

15. Brake booster according to Claim 13 or 14, **characterized in that** a washer is provided between the headless screw (41) and the reaction element (10), the output member (40) having, on the side (44) facing the reaction member (10), a recess (46) with a diameter (D2), in which the washer is arranged.

16. Brake booster according to Claim 15, **characterized in that** the diameter (D2) of the recess (46) is provided to be larger than a diameter (D1) of the threaded bore (46).

17. Brake booster according to Claim 16, **characterized in that** the washer has a convex curvature on a side facing the reaction element (10).

18. Brake booster according to Claim 16, **characterized in that** the washer is provided so as to be convexly curved on a side facing the reaction element (10).

19. Brake booster according to Claim 16, **characterized in that** the washer is provided to be conical on a side facing the reaction element (10).

20. Brake booster according to one of Claims 13 to 20, **characterized in that** an adhesive film is provided on one end face (47) of the output member (40).

21. Brake booster according to one of the preceding claims, **characterized in that,** between the valve piston (4) and the reaction element (10), a step-up washer (14) is provided, by means of which the valve piston (4) is in force transmitting connection to the reaction element (10).

22. Brake booster according to one of the preceding claims, **characterized in that** the brake booster can be activated electrically by means of a magnetic drive (31).

23. Method for setting the axial distance (z) between the valve piston (4) and the reaction element (10) in a pneumatic brake booster according to one of the preceding Claims 1 to 22, the vacuum chamber (2) of which can be acted upon with a vacuum and the working chamber (1) of which can be ventilated, in that a predefined input force (F_{E}) acts on the valve piston (4), while at the same time the output force (F_{A}) is being measured, **characterized in that** the setting of the axial distance (z) is carried out by means of a variation of the output member (11; 40).

24. Method according to Claim 23, the output member (11) of the brake booster being provided in two parts with a pressure plate (18) and with a pressure rod (19), and the pressure plate (18) bearing against the reaction element (10) and having an axial central through bore (21) in which is arranged, guided, a tenon (22) having an axial length (L) of the pressure rod (19), **characterized in that** the setting of the axial distance (z) is carried out by means of different lengths (L) of the tenon (22) of the pressure rod (19).

25. Method according to Claim 23, the output member (40) having, on a side (44) facing the reaction element (10), a threaded bore (45) into which a headless screw (41) can be screwed, and the output member (40) having a through bore (42) which issues into the threaded bore (45), **characterized in that** the setting of the axial distance (z) is carried out by rotating the headless screw (41).

## Revendications

1. Servofrein pneumatique comprenant
- un boîtier de servofrein, qui est divisé en au moins une chambre de travail (1) et au moins une chambre de dépression (2) au moyen d'au moins une paroi mobile axialement (6) pouvant être soumise à une pression différentielle pneumatique,
- un organe d'entrée actionnable comprenant un piston de soupape (4),
- un organe de sortie (11; 40) pour appliquer une force de sortie au maître-cylindre (13),
- une soupape de commande disposée dans un boîtier de commande (3) et actionnable par le piston de soupape (4), qui commande la pression différentielle, et
- un élément de réaction élastique (10), qui est disposé dans un évidement (8) du boîtier de commande et sur lequel s'applique l'organe de sortie (11; 40),
- dans lequel il est prévu des moyens qui, lorsque le servofrein est assemblé, permettent un réglage d'une distance (z) entre le piston de soupape (4) et l'élément de réaction (10),
**caractérisé en ce que** les moyens pour le réglage de la distance (z) sont prévus à l'organe de sortie (11; 40).

2. Servofrein selon la revendication 1, **caractérisé en ce que** les moyens pour le réglage de la distance (z) permettent un changement d'un volume de chambre de l'élément de réaction (10), dans lequel le volume de chambre de l'élément de réaction (10) est déterminé par l'évidement (8) du boîtier de commande et l'organe de sortie (11; 40).

3. Servofrein selon la revendication 2, **caractérisé en ce que** l'organe de sortie (11) est prévu en deux parties avec une plaque de pression (18) et une tige de pression (19), dans lequel la plaque de pression (18) s'applique sur l'élément de réaction (10) et présente un alésage de passage central axial (21), dans lequel un tourillon (22) est disposé de façon guidée avec une longueur axiale (L) de la tige de pression (19).

4. Servofrein selon la revendication 3, **caractérisé en ce que** la tige de pression (19) présente sur son côté extérieur (25) des moyens (24) pour l'identification de la longueur du tourillon (22).

5. Servofrein selon la revendication 3 ou 4, **caractérisé en ce qu'**il est prévu un pré-bombage (27) à une extrémité libre (26) du tourillon (22).

6. Servofrein selon la revendication 3 ou 4, **caractérisé en ce qu'**une extrémité libre (26) du tourillon (22) est réalisée sous forme bombée.

7. Servofrein selon la revendication 3 ou 4, **caractérisé en ce qu'**une extrémité libre (26) du tourillon (22) est réalisée en forme conique.

8. Servofrein selon l'une quelconque des revendications précédentes 3 à 5, **caractérisé en ce qu'**il est prévu à une extrémité libre (22) du tourillon un rayon (r) ou un chanfrein d'introduction.

9. Servofrein selon l'une quelconque des revendications précédentes 3 à 8, **caractérisé en ce que** la plaque de pression (18) est prévue essentiellement en forme de disque.

10. Servofrein selon l'une quelconque des revendications précédentes 3 à 8, **caractérisé en ce que** la plaque de pression (18) présente un arbre (30) formé en direction de la tige de pression (19), qui est guidé dans un plateau de guidage (17) disposé sur le boîtier de commande (3).

11. Servofrein selon l'une quelconque des revendications précédentes 3 à 8, **caractérisé en ce que** la plaque de pression (18) présente un arbre (30) formé en direction de la tige de pression (19), qui est guidé partiellement dans un plateau de guidage (17) disposé sur le boîtier de commande (3).

12. Servofrein selon l'une quelconque des revendications précédentes 10 ou 11, **caractérisé en ce que** la plaque de pression (18) présente un chanfrein d'introduction (28) sur un côté intérieur (29).

13. Servofrein selon la revendication 2, **caractérisé en ce que** l'organe de sortie (40) présente, sur un côté (44) tourné vers l'élément de réaction (10), un trou fileté (45) dans lequel une vis sans tête (41) peut être vissée, dans lequel la vis sans tête (41) permet un changement du volume de chambre de l'élément de réaction (10).

14. Servofrein selon la revendication 13, **caractérisé en ce que** l'organe de sortie (40) présente un alésage de passage (21), qui débouche dans le trou fileté (45) et par lequel un outil de réglage (43) peut être introduit pour faire tourner la vis sans tête (41).

15. Servofrein selon la revendication 13 ou 14, **caractérisé en ce qu'**il est prévu une rondelle entre la vis sans tête (41) et l'élément de réaction (10), dans lequel l'organe de sortie (40) présente sur le côté (44) tourné vers l'élément de réaction (10) un évidement (46) ayant un diamètre (D2), dans lequel la rondelle est disposée.

16. Servofrein selon la revendication 15, **caractérisé en ce que** le diamètre (D2) de l'évidement (46) est prévu plus grand qu'un diamètre (D1) du trou fileté (46).

17. Servofrein selon la revendication 16, **caractérisé en ce que** la rondelle présente un pré-bombage sur un côté tourné vers l'élément de réaction (10).

18. Servofrein selon la revendication 16, **caractérisé en ce que** la rondelle est prévue sous forme bombée sur un côté tourné vers l'élément de réaction (10).

19. Servofrein selon la revendication 16, **caractérisé en ce que** la rondelle est prévue sous forme conique sur un côté tourné vers l'élément de réaction (10).

20. Servofrein selon l'une quelconque des revendications précédentes 13 à 20, **caractérisé en ce qu'**il est prévu une feuille adhésive sur une face frontale (47) de l'organe de sortie (40).

21. Servofrein selon l'une quelconque des revendications précédentes, **caractérisé en ce qu'**il est prévu entre le piston de soupape (4) et l'élément de réaction (10) une rondelle de transmission (14), au moyen de laquelle le piston de soupape (4) se trouve en liaison de transmission de force avec l'élément de réaction (10).

22. Servofrein selon l'une quelconque des revendications précédentes, **caractérisé en ce que** le servofrein peut être commandé électriquement au moyen d'un entraînement magnétique (31).

23. Procédé de réglage de la distance axiale (z) entre le piston de soupape (4) et l'élément de réaction (10) dans un servofrein pneumatique selon l'une quelconque des revendications précédentes 1 à 22, dont la chambre de dépression (2) peut être mise sous dépression et la chambre de travail (1) peut être aérée, du fait qu'une force d'entrée préalablement fixée (F_{E}) agit sur le piston de soupape (4) avec mesure simultanée de la force de sortie (F_{A}), **caractérisé en ce que** le réglage de la distance axiale (z) est effectué par un changement de l'organe de sortie (11; 40).

24. Procédé selon la revendication 23, dans lequel l'organe de sortie (11) du servofrein est prévu en deux parties avec une plaque de pression (18) et une tige de pression (19) et dans lequel la plaque de pression (18) s'applique sur l'élément de réaction (10) et présente un alésage de passage central axial (21), dans lequel un tourillon (22) est disposé de façon guidée avec une longueur axiale (L) de la tige de pression (19), **caractérisé en ce que** le réglage de la distance axiale (z) est effectué par des longueurs différentes (L) du tourillon (22) de la tige de pression (19).

25. Procédé selon la revendication 23, dans lequel l'organe de sortie (40) présente sur un côté (44) tourné vers l'élément de réaction (10) un trou fileté (45), dans lequel une vis sans tête (41) peut être vissée, et l'organe de sortie (40) présente un alésage de passage (42), qui débouche dans le trou fileté (45), **caractérisé en ce que** le réglage de la distance axiale (z) est effectué par rotation de la vis sans tête (41).
